Europäisches Patentamt

European Patent Office

Office européen des brevets

(19)

(11) Veröffentlichungsnummer : **0 132 012**
**B1**

(12) EUROPÄISCHE PATENTSCHRIFT

(45) Veröffentlichungstag der Patentschrift :
21.01.87

(51) Int. Cl.⁴ : **A 01 D 34/63**

(21) Anmeldenummer : 84201031.6

(22) Anmeldetag : 12.07.84

(54) Mähmaschine.

(30) Priorität : 16.07.83 NL 8302556

(43) Veröffentlichungstag der Anmeldung :
23.01.85 Patentblatt 85/04

(45) Bekanntmachung des Hinweises auf die Patenterteilung : 21.01.87 Patentblatt 87/04

(84) Benannte Vertragsstaaten :
AT BE CH DE FR GB IT LI LU NL SE

(56) Entgegenhaltungen :
CH-A- 425 311
DE-A- 1 507 291
DE-A- 2 336 060
DE-A- 2 842 015
DE-A- 3 120 209

(73) Patentinhaber : Zweegers, Petrus Wilhelmus
Nuenenseweg 165 Postbus 9
NL-5600 AA Geldrop (NL)

(72) Erfinder : Zweegers, Petrus Wilhelmus
Nuenenseweg 165 Postbus 9
NL-5600 AA Geldrop (NL)

(74) Vertreter : Noz, Franciscus Xaverius, Ir. et al
Algemeen Octrooibureau P.O. Box 645
NL-5600 AP Eindhoven (NL)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

## Beschreibung

Die Erfindung betrifft eine Mähmaschine mit einem Gestell und mindestens vier um aufwärts gerichtete Drehachsen drehbaren Mähorganen, die je für sich mit Schneidmessern und über diesen Schneidmessern angeordneten Trommeln versehen sind, wobei der Antrieb der Mähorgane derart ist, dass im Betrieb benachbarte Trommeln sich gegensinnig drehen.

Bei solchen seit vielen Jahren allgemein üblichen Mähmaschinen sind die Mähorgane identisch ausgebildet, was bedeutet, dass die Enden der Schneidmesser im Betrieb Kreise gleichen Durchmesser beschreiben, während die Trommeln alle den gleichen Querschnitt aufweisen. Das geschnittene Erntegut wird dabei zwischen den Trommeln sich gegensinnig drehender Mähorgane nach hinten geführt und hinter der Mähmaschine in einem Schwaden hingelegt, dessen Breite annähernd dem Abstand zwischen den einander zugewandten Seiten der Trommeln der äusseren Mähorgane entspricht. Bei Verwendung hinter den Trommeln angeordneter Schwadbretter kann die Breite dieses Schwadens etwas verringert werden. Bei Verwendung von Mähmaschinen mit grosser Arbeitsbreite kann jedoch die Breite eines in dieser Weise gebildeten Schwadens so gross sein, insbesondere wenn die Mähmaschine vorne an einem Schlepper angebracht ist, und also einen sogenannten Frontmäher bildet, dass der Nachteil auftritt, dass die Schlepperräder unvermeidlich über das geschnittene Erntegut hinfahren, was selbstverständlich unerwünscht ist. Auch bei Verwendung sogenannter Ladewagen, darf die Breite des aufzunehmenden Schwadens nicht zu gross sein.

Die Erfindung bezweckt, eine Mähmaschine vorerwähnter Art zu schaffen, mittels der das Erntegut in einfacher Weise in Form eines Schwadens hingelegt werden kann, der schmäler ist als die üblichen, bei solchen Mähmaschinen gebildeten Schwaden.

Gemäss der Erfindung kann dies dadurch erreicht werden, dass die Durchmesser der von den Enden der Schneidmesser der äusseren Mähorgane im Betrieb beschriebenen Kreise grösser sind als die der zwischenliegenden Mähorgane.

Die Erfindung wird nachstehend an Hand einiger in beiliegender Zeichnung schematisch dargestellter Ausführungsformen der Konstruktion nach der Erfindung näher erläutert. Es zeigen

Figur 1 schematisch eine Seitenansicht einer Mähmaschine nach der Erfindung,

Figur 2 schematisch einen Schnitt längs der Linie II-II in Fig. 1,

Figur 3 einen Schnitt entsprechend Fig. 2 mit Angabe einer möglichen Anordnung von Schwadbrettern.

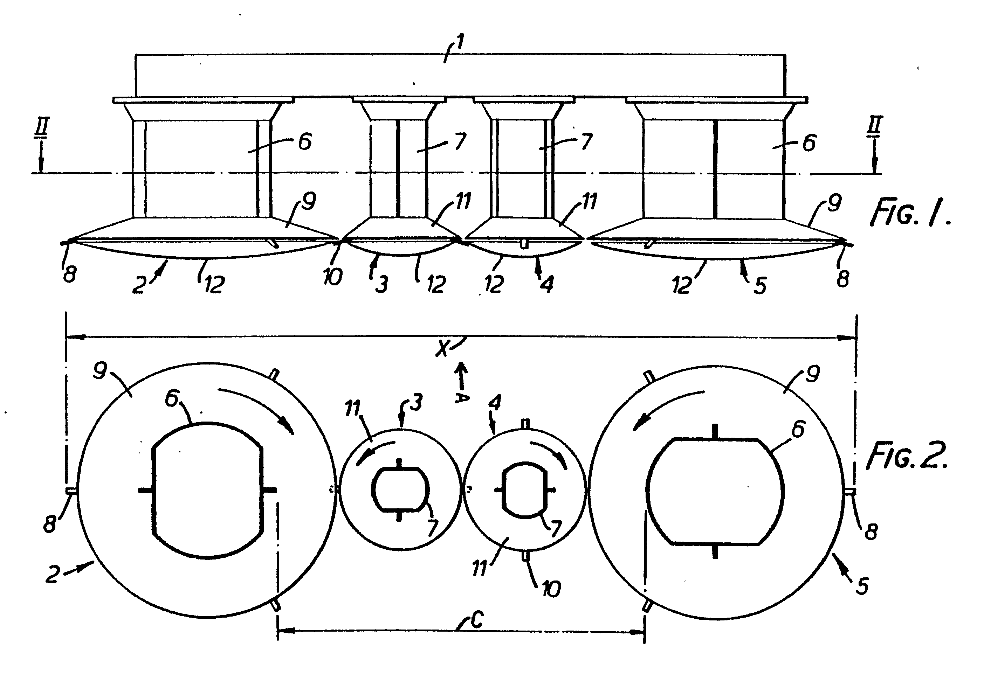

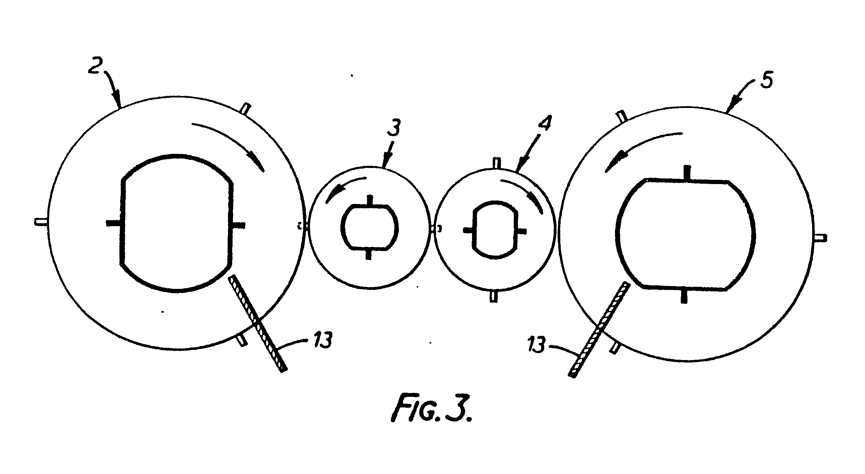

Die in den Fig. 1 und 2 dargestellte Mähmaschine enthält einen langgestreckten Tragbalken 1, mit dem vier unter diesem Tragbalken liegende Mähorgane 2 bis 5 verbunden sind. Die Mähorgane sind in üblicher Weise aufgebaut und mit einer Trommel versehen, sowie mit einem sich an das untere Ende der Trommel anschliessenden, ringförmigen Kragen, an dem Schneidmesser befestigt sind und mit einer unter dem Kragen liegenden Stützschüssel.

Aus den Figuren geht hervor, dass die Trommeln 6 der beiden äusseren Mähorgane 2 und 5 einen erheblich grösseren Querschnitt aufweisen als die beiden Trommeln 7 der inneren Mähorgane 3 und 4. Dementsprechend sind die Aussendurchmesser der die Messer 8 der äusseren Mähorgane abstützenden Ringkragen 9 erheblich grösser als die Aussendurchmesser der die Messer 10 der inneren Trommeln 3 und 4 abstützenden Ringkragen 11. In der dargestellten Ausführungsform ist der Durchmesser des von den freien Enden der Schneidmesser 10 der inneren Mähorgane beschriebenen Kreises etwa die Hälfte des Durchmessers des von den Enden der Schneidmesser 8 der äusseren Mähorgane 2 und 5 beschriebenen Kreises. Die Grösse des Trommelquerschnitts ist angepasst. Die Mähorgane haben ferner nach Grösse angemessene Stützschüsseln 12.

Die Mähorgane können in üblicher Weise durch einen im Hohlbalken 1 untergebrachten Übersetzungsmechanismus derart angetrieben werden, dass benachbarte Mähorgane sich gegensinnig drehen, was mit Pfeilen in Fig. 2 angedeutet ist. Ferner ist die Mähmaschine in üblicher Weise mit nicht dargestellten Mitteln zur Ankupplung der Mähmaschine an einem landwirtschaftlichen Schlepper oder dgl. und mit Mitteln versehen, durch die die Mähorgane durch den im Hohlbalken 1 liegenden Übersetzungsmechanismus ab der Zapfwelle eines Schleppers oder dgl. angetrieben werden können.

Wie vorstehend gesagt eignet sich die Vorrichtung besonders gut zur Ankupplung an der Vorderseite eines Schleppers oder dgl., wozu selbstverständlich mit dem Gestellteil 1 angemessene Ankupplungsorgane verbunden sind, um die Mähmaschine an der Vorderseite des Schleppers derart zu befestigen, dass eine mittig zwischen den mittleren Mähorganen 3 und 4 liegende, zum Tragbalken 1 senkrechte Ebene sich mit der Längsmittelebene des Schleppers deckt. Im Betrieb wird die Vorrichtung in Richtung des Pfeils A fortbewegt, wobei das geschnittene Erntegut zwischen den benachbarten Trommeln 6 und 7 hin nach hinten versetzt und an dieser Stelle in einem Schwaden hingelegt wird, dessen Breite mit der Linie C angegeben ist.

Da bei der vorstehend geschilderten Vorrichtung die äusseren Mähorgane einen beträchtlich grösseren Durchmesser haben als die zwischenliegenden Mähorgane, werden diese äusseren Mähorgane das Erntegut über einen grösseren Abstand in Richtung auf die Mitte der Maschine versetzen als bei einer üblichen Anordnung, bei der die mit der Linie X angedeutete Mähbreite mit vier Mähorganen gleichen Durchmessers bestrichen wird. Daher ist bei Verwendung der Konstruktion nach der Erfindung bei gleicher Mähbreite X die Breite C des gebildeten Schwadens kleiner als die Breite des mittels einer üblichen Mähvorrichtung gebildeten Schwadens.

Fig. 3 zeigt noch schematisch, dass die Schwadbreite noch weiter verkleinert werden kann, wenn nahe den äusseren Mähtrommeln 6 Schwadbretter 13 oder Schwadräder angeordnet werden.

Die Stützschüsseln 12 der äusseren Mähorgane sind vorzugsweise in der Höhenrichtung einstellbar zur Einstellung der Mähhöhe. Diese grossen Stützschüsseln können gemeinsam unbedenklich die Vorrichtung abstützen, so dass für die zwischenliegenden Trommeln keine einstellbaren Schüsseln benötigt sind.

**Patentansprüche**

1. Mähmaschine mit einem Gestell und mindestens vier um aufwärts gerichtete Drehwellen drehbaren Mähorganen, die je für sich mit Schneidmessern und über diesen Schneidmessern liegenden Trommeln versehen sind, wobei der Antrieb der Mähorgane derart ist, dass im Betrieb benachbarte Trommeln sich gegensinnig drehen, dadurch gekennzeichnet, dass die Durchmesser der von den Enden der Schneidmesser der äusseren Mähorgane im Betrieb beschriebenen Kreise grösser sind als die der zwischenliegenden Mähorgane.

2. Mähmaschine nach Anspruch 1 dadurch gekennzeichnet, dass die Querschnitte der Trommeln der äusseren Mähorgane grösser sind als die der zwischenliegenden Mähorgane.

3. Mähmaschine nach Anspruch 1 oder 2 dadurch gekennzeichnet, dass der Durchmesser eines von den Enden der Schneidmesser eines äusseren Mähorgans beschriebenen Kreises etwa das Zweifache des Durchmessers des von den Enden der Schneidmesser eines zwischenliegenden Mähorgans beschriebenen Kreises ist.

4. Mähmaschine nach Anspruch 2 oder 3 dadurch gekennzeichnet, dass der Durchmesser bzw. die grösste und kleinste Mittellinie einer äusseren Trommel etwa gleich dem Zweifachen des Durchmessers bzw. der grössten und kleinsten Mittellinie der Trommel eines zwischen den äusseren Mähorganen liegenden Mähorgans oder grösser als dieser ist.

**Claims**

1. Mowing machine having a frame and at least four mowing members which are mounted to rotate about upwardly directed rotary shafts and which are each provided with cutting blades and drums above these cutting blades, whereby the drive of the mowing members is such that in operation adjacent drums rotate in opposite directions, characterised in that the diameters of the circles described by the ends of the cutting blades of the outer mowing members when in operation are larger than those of the intermediate mowing members.

2. Mowing machine as claimed in claim 1, characterised in that the cross-sections of the drums of the outer mowing members are larger than those of the intermediate mowing members.

3. Mowing machine as claimed in claim 1 or 2, characterised in that the diameter of a circle described by the ends of the cutting blades of an outer mowing member is approximately double the diameter of the circle described by the ends of the cutting blades of an intermediate mowing member.

4. Mowing machine as claimed in claim 2 or 3, characterised in that the diameter or the largest and smallest central line of an outer drum is approximately equal to double the diameter or the largest and smallest central line of the drum of a mowing member lying between the outer mowing members or is larger than it.

**Revendications**

1. Faucheuse comprenant un châssis et au moins quatre organes de coupe qui tournent autour d'arbres rotatifs dirigés vers le haut et dont chacun est muni de couteaux et d'un tambour situé au-dessus de ces couteaux, l'entraînement des organes de coupe étant tel que, en fonctionnement, les tambours voisins tournent l'un en sens inverse de l'autre, caractérisée en ce que les diamètres des cercles décrits en fonctionnement par les extrémités des couteaux des organes de coupe extérieurs sont plus grands que ceux des organes de coupe intermédiaires.

2. Faucheuse selon la revendication 1, caractérisée en ce que les sections des tambours des organes de coupe extérieurs sont plus grandes que celles des tambours des organes de coupe intermédiaires.

3. Faucheuse selon la revendication 1 ou la revendication 2, caractérisée en ce que le diamètre d'un cercle décrit par les extrémités des couteaux d'un organe de coupe extérieur est à peu près le double du diamètre du cercle décrit par les extrémités des couteaux d'un organe de coupe intérieur.

4. Faucheuse selon la revendication 2 ou la revendication 3, caractérisée en ce que le diamètre, ou le grand axe et le petit axe, d'un tambour extérieur est ou sont à peu près égal ou égaux, ou supérieur(s) au double du diamètre, ou du grand axe et du petit axe, d'un tambour d'un organe de coupe situé entre les organes de coupe extérieurs.

*Fig. I.*

*Fig. 2.*

0 132 012

*FIG.3.*

0 132 012